Europäisches Patentamt

(19) European Patent Office

Office européen des brevets

(11) Publication number: **0 054 617**
**B1**

(12) **EUROPEAN PATENT SPECIFICATION**

(45) Date of publication of patent specification: **28.01.87**

(21) Application number: **81107072.1**

(22) Date of filing: **09.09.81**

(51) Int. Cl.⁴: **F 16 C 32/04**

(54) **Linear magnetic bearings.**

(30) Priority: **24.12.80 US 220213**

(43) Date of publication of application:
**30.06.82 Bulletin 82/26**

(45) Publication of the grant of the patent:
**28.01.87 Bulletin 87/05**

(84) Designated Contracting States:
**BE CH DE FR GB IT LI NL SE**

(56) References cited:
**DE-B-2 420 814**
**DE-C- 330 994**
**US-A-3 112 962**
**US-A-3 243 238**
**US-A-3 787 100**
**US-A-4 180 946**

(73) Proprietor: **NATIONAL AERONAUTICS AND**
**SPACE ADMINISTRATION**
**NASA Headquarters**
**Washington, D.C. 20546 (US)**

(72) Inventor: **Goldowsky, Michael Philip**
**7 Greenwood Lane**
**Valhalla New York 10595 (US)**

(74) Representative: **Bolte, Erich, Dipl.-Ing. et al**
**c/o Meissner & Bolte Patentanwälte Hollerallee**
**73**
**D-2800 Bremen (DE)**

Courier Press, Leamington Spa, England.

## Description

The invention relates to an active magnetic bearing assembly comprising an elongated housing, a shaft within the housing with a major linear axis and comprised at least partially of magnetic material, electromagnetic means comprising a set of equidistantly spaced electromagnets arranged in a plane which is perpendicular to the major axis of the shaft and selectively energisable for controlling the radial position of the shaft, means for controlling the axial position of the shaft, sensor means for detecting the position of the shaft, and circuit means connected to the sensor means and to the electromagnetic means for controlling the radial position of the shaft.

A bearing assembly of this type is described in US—A—4,180,946 in connection with a tool holding spindle assembly, particularly for a grinding machine. The purpose of the magnetic bearing disclosed is to impart a rotary motion to the main shaft and to allow for high revolution speeds. While there is a single axial bearing in that structure this component is just provided for controlling the linear and axial motion of the shaft in order to maintain the shaft in a fixed axial position and to avoid any substantial axial displacement by inadvertency.

Accordingly, the axial position of the shaft is defined by a disk-shaped armature between two ferromagnetic bodies provided with coils. In this way, the axial bearing armature is limited in its travel to a very small distance between its controlling coils, and the clearance is of the order of 0,10 to 0,20 mm in order to obtain the desired high speeds of rotation in the order of 60 000 rpm. Since the magnetic portions of the shaft are just coextensive with the pole pieces the slightest linear movement of the shaft would change the reluctance of the magnetic circuit between the pole pieces and the magnetic portions of the shaft so that a significant linear movement of the shaft would result in loss of support for the shaft. In these circumstances, the magnetic bearing assembly according to US—A—4,180,946 is neither provided nor suitable for structures where a free and substantial axial motion of the shaft is required.

The object underlying the invention is to provide for an improved non-frictional magnetic bearing assembly allowing for a substantial axial movement of the shaft without changing the reluctance of the magnetic circuit.

According to the invention, this problem is solved by a magnetic bearing assembly which is characterized in that the means for controlling the axial position of the shaft comprises an axially magnetized bumper assembly comprising a pair of stationary magnets spaced apart and held in place in a housing, and a magnet attached to the shaft for substantial axial movement between the pair of magnets, and in that the shaft comprises defined regions wherein the volume of magnetic material per unit length of the shaft is greater than in the rest of the shaft, the regions being of such a length that they remain within the influence of the electromagnetic means over said substantial axial movement of the shaft.

In this manner, the problem is solved satisfactorily without requiring a complicated structure and ensuring a reliable operation of the bearing assembly.

A further embodiment is characterized in that a coil is provided around the housing and connected to a power source for controlling the axial movement of the shaft. When applying an AC current to the coil an oscillatory movement of the shaft in a linear direction is obtained; when applying a DC current the shaft will be displaced by a corresponding amount in one direction.

A further embodiment is characterized in that the polarity of the stationary magnets is opposite to the polarity of the magnet attached to the shaft. Accordingly, the shaft with its magnet is adapted to float therebetween.

A further embodiment is characterized in that the shaft is formed as a unitary member having a small diameter axial bore and enlarged diameter end bore portions provided in the region of the sensor means. These measures are taken in order to reduce the weight of the bearing assembly.

Another embodiment according to the invention is characterized in that the diameter of the shaft is reduced in an intermediate region between regions in which the volume of magnetic material per unit length of the shaft is greater than in the rest of the shaft. Also, these measures are taken for reducing the weight of the shaft.

In another embodiment according to the invention the shaft comprises an axial bore and a pair of magnetic sleeve members fitted on the outer surface of the shaft in the region of the electromagnetic means. In this way, the weight of the shaft can be reduced if necessary.

In another embodiment according to the invention the hollow shaft is of magnetic material within which a pair of internal magnetic sleeve members is placed in the region of the electromagnetic means. In this way, the desired defined magnetic regions are obtained wherein the weight of the shaft can be reduced at the same time.

A further embodiment according to the invention is characterized in that the housing is provided with outwardly extending shield plates shielding the sensor means from the electromagnetic means. In this manner, the operation and function of the magnetic bearing assembly is further improved.

The invention will be described in detail with reference to the accompanying drawings showing embodiments of the active magnetic bearing assembly, wherein

Figure 1 is a perspective view of an embodiment generally illustrative of the subject invention;

Figure 2 is a longitudinal central cross sectional view of the preferred embodiment of the subject invention;

Figure 3 is a sectional view of the preferred embodiment shown in Figure 2 taken along the lines 3—3 thereof;

Figure 4 is a perspective view illustrative of a tapered pole piece utilized in connection with the embodiment shown in Figure 2;

Figure 5 is a schematic diagram helpful in understanding the operation of the subject invention;

Figure 6 is a schematic diagram further helpful in understanding the operation of the subject invention;

Figures 7 and 8 are cut-away views illustrative of two other types of armature shafts adapted to be utilized by the subject invention; and

Figure 9 is an electrical schematic diagram illustrative of the control circuitry utilized for one orthogonal axis of the embodiment shown in Figure 2.

Detailed Description of the Invention

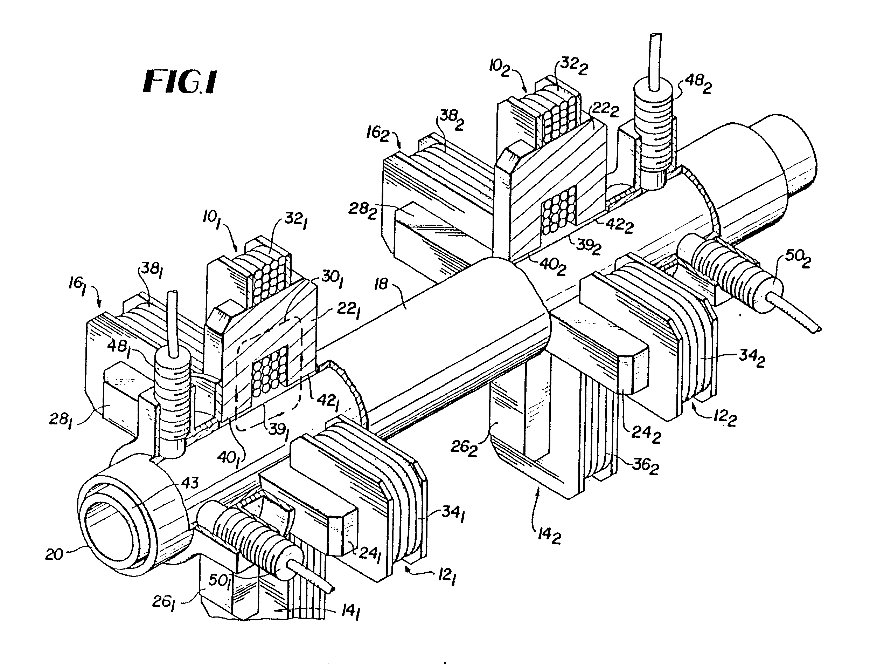

With reference to the drawings and more particularly to Figure 1, shown therein are two sets of four stationary electromagnets $10_1$, $12_1$, $14_1$, $16_1$ and $10_2$, $12_2$, $14_2$, $16_2$ located at each end of an elongated cylindrical housing 18 comprised of non-magnetic material which is adapted to accommodate an armature 20 in the form of a linear cylindrical shaft. The armature shaft 20 is adapted for both reciprocal and rotational motion within the housing 18. The shaft 20 is highly magnetic, at least in the vicinity of two sets of pole pieces $22_1$, $24_1$, $26_1$, $28_1$, and $22_2$, $24_2$, $26_2$, $28_2$ so that the flux generated by respective coils $32_1$, $34_1$, $36_1$, $38_1$, and $32_2$, $34_2$, $36_2$, $38_2$ is circulated through two housing wall sections $39_1$ and $39_2$, respectively, in a closed path $30_1$ and $30_2$ respectively, through two series of air gaps $40_1$, $42_1$ and $40_2$, $42_2$ respectively, formed between the outer surface 43 of the shaft 20 and the pole piece faces. A magnetic attraction force is developed by each of the electromagnets in the respective pole pieces by applying a unidirectional (DC) current to the coils $32_1$, $34_1$ ... $36_2$, $38_2$. In this manner, attractive forces acting in four quadrants are developed at each end of the housing 18 which are exerted upon the shaft 20. In a balanced condition, the shaft 20 will be axially suspended along the central longitudinal axis of the housing 18.

The system shown in Figure 1 is an active system in that positional information with respect to axial alignment of the shaft 20 is provided to excite opposing pairs of coils e.g., $32_1$ and $36_1$ by means of one of four like feedback control loops, to be described, with reference to Figure 9. The positional information at each end of the housing 18 is provided by two pairs of sensor devices which include transducers $48_1$, $50_1$, $48_2$, $50_2$. These transducers are placed at right angles to one another, aligned with and adjacent respective electromagnets $10_1$, $12_1$ and $10_2$, $12_2$. The transducers may consist of eddy current sensor devices which include a probe tip, not shown, which extends into the interior of the housing 18 in close proximity to the outer surface 43 of the armature shaft 20. This type of sensor device is of a conventional design and comprises one component of a known eddy current sensor system, a typical example of which is a Probe Tip Model No. 300 marketed by the Bently Nevada Corporation. When desirable, capacitive-type sensors may be employed. Position sensor $48_1$, for example, is adapted to operate in conjunction with the electromagnets $10_1$ and $14_1$ which lie along one rectilinear axis whereas position sensor $50_1$ operates in connection with electromagnets $12_1$ and $16_1$, which lie along an axis perpendicular to the first axis.

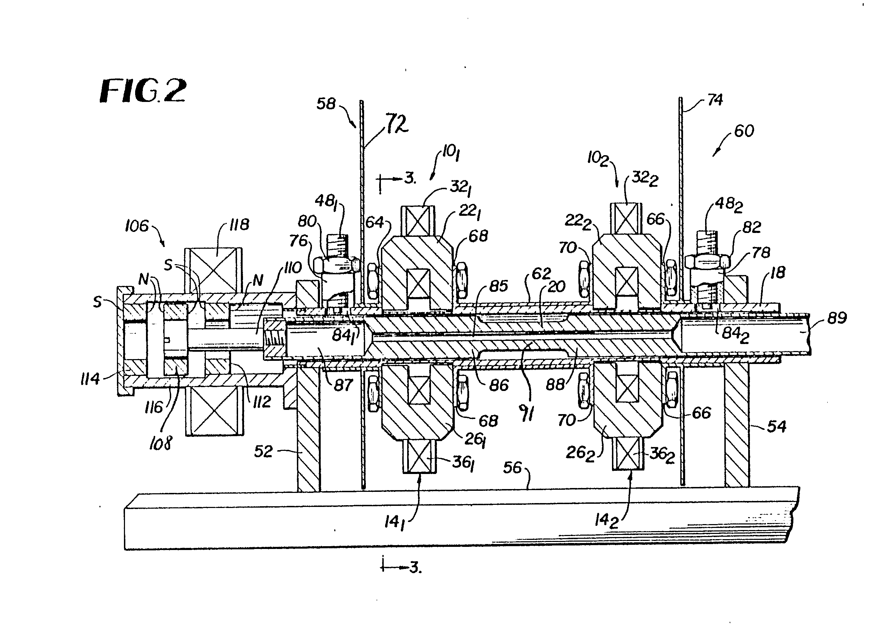

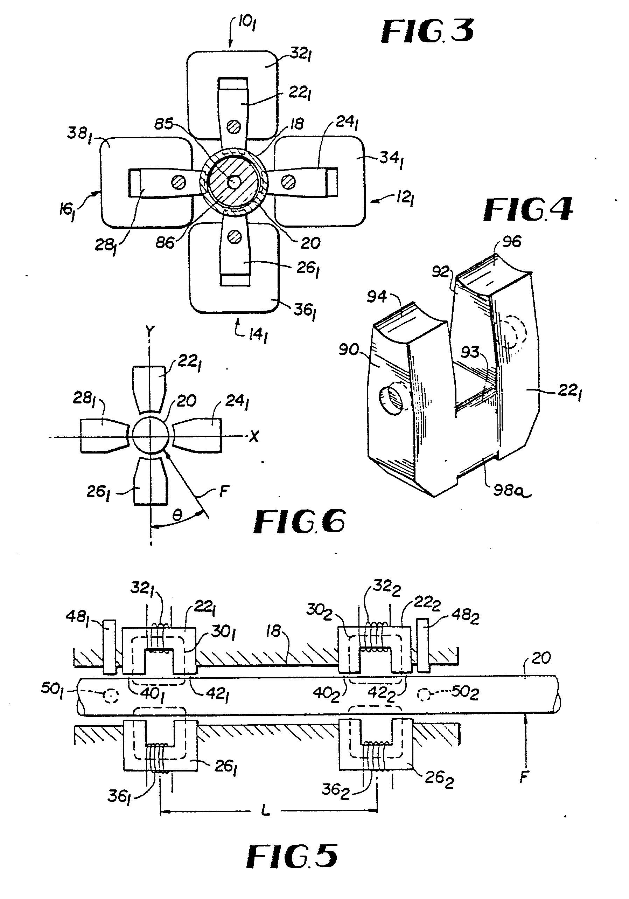

Referring now to Figures 2 and 3, there are disclosed the details of a preferred embodiment of the invention which incorporates the features of Figure 1. In Figure 2, the housing 18 is shown in cross section mounted between two support pedestals 52 and 54 which are secured to a base plate member 56. The two sets of electromagnets $10_1$, $10_2$, etc. are mounted on the housing 18 by two tubular type outer flange members 58 and 60, respectively, and a central flange member 62 which is also tubular in shape. The respective flange members include right angled circular flange sections 64, 66, 68 and 70 which are adapted to accept threaded hardware for securing the respective pole pieces thereto. The outer flange members 58 and 60 are securely fastened to the housing 18 and additionally include respective outwardly extending shield plates 72 and 74 which shield the position transducers $48_1$, $50_1$ and $48_2$, $50_2$ from the respective electromagnets which are located on the other side thereof.

As to the two sets of position transducers $48_1$, $50_1$ and $48_2$, $50_2$ at each end of the housing, they are mounted in respective relatively small radially outwardly projecting mounting flange portions 76 and 78 which are integral with the end flanges 58 and 60. Each transducer $48_1$, $48_2$, etc. includes a threaded outer wall which is adapted to engage and be held in place by nuts 80, 82 which also provide for positioning the tip of the transducers $48_1$ and $48_2$ within holes $84_1$ and $84_2$ provided in a wall of the housing 18. The same structure is utilized for the orthogonally positioned transducers $50_1$ and $50_2$ shown in Figure 1.

The armature shaft 20 includes enlarged cross sectional portions 86 and 88 in the region of the pole pieces $22_1$, $26_1$ and $22_2$, $26_2$, respectively. The armature shaft 20, moreover, is comprised of magnetically permeable material throughout and accordingly the enlarged portions 86 and 88 provide a close magnetic coupling to the surrounding pole pieces. The cross sectional area of the shaft portions 86 and 88 is also made sufficiently large not to saturate; otherwise, a substantial amount of coil ampere turns would be required for the passage of the armature flux. Accordingly, the shaft material is typically comprised of cold rolled steel because it has a relatively high magnetic saturation level and as such a relatively small diameter shaft can pass a large amount of flux. Its relatively high permeability also gives a larger AC skin depth for AC flux penetration than, for example, pure iron.

While the orthogonality of the electromagnets is shown in Figure 1, it is further illustrated in Figure 3 wherein electromagnets $10_1$ and $14_1$ are shown opposing one another along the vertical axis while electromagnets $12_1$ and $16_1$ oppose one another along the horizontal axis. Figure 3 also illustrates the central longitudinal alignment of the shaft portion 86 within the housing 18 when suspended as well as the general shape of the pole pieces $22_1$, $24_1$, $26_1$ and $28_1$, and their respective windings $32_1$, $34_1$, $36_1$ and $38_1$.

As to the pole pieces themselves, they are all identical in construction. One illustrative pole piece $22_1$ is shown in perspective view in Figure 4. The pole piece $22_1$ is a generally U-shaped, bifurcated member including leg portions 90 and 92 separated by a bight portion 93. The leg portions 90 and 92 are tapered downwardly toward concave pole faces 94 and 96, respectively, which have a radius just slightly larger than the inner surface of the housing 18. The tapering of the pole piece leg portions 90 and 92 provides a concentration of the flux whereas the curved pole faces 94 and 96 provide a constant air gap between the pole piece and the suspended shaft 20 as shown in Figures 1 and 3. While flux leakage occurs, the pole piece mid-section or bight portion 93, which accommodates a coil, not shown, and is relatively thick in the region 98a to avoid saturation and allow the flux to pass at a low flux density level through the poles faces 94 and 96 to the armature shaft 20. The tapered pole piece also serves to increase the magnetic suspension force of the bearing inasmuch as the suspension force is proportional to the square of the flux divided by the gap cross sectional area. Accordingly, the smaller the cross sectional area of the gap, the greater the attractive force. The pole pieces need not be tapered, however, to work effectively.

While the armature shaft 20, shown in the preferred embodiment of Figure 2, is comprised of a unitary member, it nevertheless includes a small diameter axial bore 85 which terminates in enlarged diameter end bore portions 87 and 89 which exist in the region of the position transducers $48_1$, $50_1$ and $48_2$, $50_2$, respectively. The purpose of the bore portions 85, 87 and 89 is to reduce the weight of the suspended shaft 20 as much as possible. Accordingly, the diameter of the shaft 20 is further reduced in the intermediate region 91 shown in Figure 2.

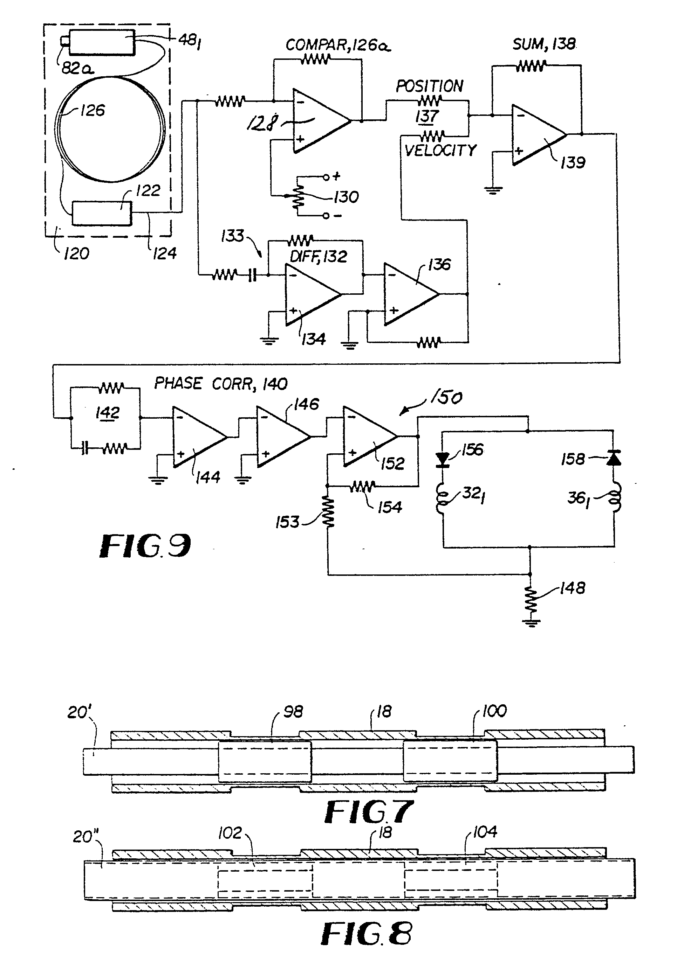

Alternative configurations of the armature shaft 20 are shown in Figures 7 and 8. In Figure 7, a relatively small diameter shaft member 20' which may be hollow, for example, includes a pair of magnetic sleeve members 98 and 100 fitted on the outer surface of the shaft in the region of the electromagnets, not shown. In such an arrangement, the shaft 20' need not be comprised of magnetically permeable material but may consist of non-magnetic material such as plastic. Alternatively, another configuration of the armature shaft comprises the configuration shown in Figure 8 wherein rererence numeral 20" denotes a relatively thin hollow tubular shaft consisting of magnetic material within which is placed a pair of internal sleeve members 102 and 104, also comprised of magnetic material. In both cases the region of the location of the electromagnets in the respective air gaps is enlarged so that magnetic saturation does not occur with the design of the particular magnetic circuit utilized.

In order to provide an understanding of the operation of the active magnetic bearing as disclosed in Figures 1 and 2, reference will now be made to Figures 5 and 6 which respectively provide a side planar and end view of a schematic representation of the invention. As shown in Figure 6, the armature shaft 20 is centrally located between the pole pieces $22_1$, $24_1$, $26_1$ and $28_1$. As shown in Figure 5, flux paths $30_1$ and $30_2$, respectively, cross the air gaps $40_1$, $42_1$ and $40_2$, $42_2$ to the surface of the armature shaft 20 whereupon a magnetic attraction force is developed by each individual pole piece when a DC current is applied to the respective coils. By operating mutually opposing pairs of coils concurrently, quadrant forces are developed along orthogonal X and Y axes to maintain the armature shaft 20 in suspension. Any external force which might be imposed on a shaft 20, such as a force F applied at an angle $\theta$ with respect to the Y axis, as shown in Figure 6, will produce two orthogonal component forces directed along the X and Y axes which tends to displace the shaft 20 away from the central longitudinal axis. Accordingly, it can be seen then that in order to realign the shaft 20, excitation of the coils energizing the pole pieces $24_1$ and $26_1$ would be required in order to bring the shaft back into alignment. Also because two sets of electromagnets are separated by a distance L, the applied force F produces a cantilever effect on the shaft 20 which results in different forces being applied along the respective X—Y axes at the location of the two sets of electromagnets. Therefore, counter moments must be separately created by the eight pole pieces which also results in the bearing having an enhanced torsional stability and moment carrying capability.

The advantage in using four equally spaced pole pieces is that cross coupling of the pole piece forces is substantially absent due to the orthogonality of the arrangement. Consequently, each coil can be energized in respect to shaft position information derived by one of the transducers $48_1$, $50_1$ or $48_2$, $50_2$ which are also located along the X—Y axes. While a minimum number of electromagnets required to constrain a shaft is three, a three pole configuration requires complex signal processing to direct current through the appropriate suspension coils. A four pole configuration therefore provides a simpler approach because coil excitation signals for only two axes (X and Y) are required.

Prior to considering the electronic circuitry utilized for implementing the servo-type control system which operates to excite the required electromagnetic coils to counteract any forces acting on the armature shaft 20, reference will again be made briefly to the embodiment shown in Figure 2 wherein there is shown an axially magnetized bumper assembly 106. Included therein is an axially magnetized permanent magnet 108 which is secured to a shaft 110 attached to one end of the shaft 20. The shaft 110 extends through one of a pair of stationary axially magnetized permanent magnets 112 and 114 which are held in place by a cylindrical housing 116 attached to the pedestal 52. The magnet 108 is poled to be repulsed by both of the stationary magnets 112 and 114 so that it is adapted to float therebetween. As a result, any undesired lateral, i.e., axial, displacement of the armature shaft 20 will be acted on by a restoring force developed by the assembly 106. In the event that an oscillatory movement of the shaft 20 in a linear direction is required, a coil 118 is provided around the housing 116 which is excited by an AC current. Upon the application of an AC current to the coil 118, an axial magnetic field will be applied to the bumper magnet 108 which will oscillate back and forth between the fixed magnets 112 and 114. Because it is attached to the armature shaft 20 by means of the rod 110, an oscillatory movement will be imparted to the shaft. The application of a DC signal to coil 118 will result in the shaft 20 achieving a fixed axial position.

Considering now the electrical control portion of the subject invention, in order to develop the necessary counteracting magnetic attractive forces required to maintain the armature shaft in alignment, four substantially identical circuit configurations, one of which is shown in Figure 9, is utilized for energizing the four pairs of mutually opposing windings along the horizontal (X) and vertical (Y) axes at both ends of the housing 18. The circuit configuration shown in Figure 9 is typically illustrative of the circuit utilized for implementing a closed loop feedback circuit for energizing the opposing windings $32_1$ and $36_1$ along the vertical or Y axis in response to positional information of the shaft sensed by the transducer $48_1$.

As shown in Figure 9, the transducer $48_1$ forms one element of an eddy current sensor system 120 which, for example, may be a Proximeter Model No. 3000 manufactured by the Bently Nevada Corporation. Additionally, the sensor system 120 includes an RF coil, not shown, located on the forward tip 82a of the transducer $48_1$ which is placed adjacent the armature shaft 20 as shown in Figure 2. The RF coil is excited with a nominal frequency of, for example, 2 MHz from a circuit module 122 including an oscillator circuit, not shown. The coil in the tip 82a radiates a localized magnetic field pattern which produces eddy currents in the surface layer of the armature shaft 20 which "loads down" the RF coil. A resonant circuit in the circuit modules 122 changes its amplitude in response to the loading, whereupon an output signal appearing on lead 124 changes correspondingly. As the sensed surface of the armature shaft is moved closer to the probe tip 82a coupling of the radiated field increases and therefore the loss in the RF coil loading increases, causing the output voltage from the circuit module 122 to change. A cable 126 couples the transducer $48_1$ to the circuit module 122. Inasmuch as the cable 126 has a specified capacitance per unit length, it interacts with the resonant circuit elements inside the circuit module 122 and accordingly affects the nominal resonant frequency, which by varying the lengths of cable, the carrier frequency exciting the RF coil can be changed. Interference can occur between the various transducers 48 and 50 at each end of the housing 18 because the suspended armature shaft 20 acts like a coaxial transmission line. To overcome this effect, the respective transducer carrier frequencies are preferably offset by predetermined amount by the selection of different cable lengths.

The sensor output signal which appears on circuit lead 124 is split into two circuit paths. One circuit path connects to a position comparator circuit 126a which includes an operational amplifier 128 having one input (−) coupled to the sensor signal, while the other input (+) is coupled to a variable DC reference signal provided by a potentiometer 130 coupled across a fixed DC voltage source, not shown. The operational amplifier 128 provides a difference signal output between the existing and desired positional inputs and thus generates an error signal which is directly proportional to the displacement of the armature shaft 20 from its central or axial position within the housing 18. The output signal from the operational amplifier 128, moreover, is positive for displacement of the armature shaft 20 in one direction while it is negative if the displacement is in the opposite direction. The other circuit path is coupled to a differentiator circuit 132 which includes a resistive-capacitive network 133 coupled to one input (−) of an operational amplifier 134 whose other input (+) is grounded. The output of the operational amplifier 134 accordingly comprises a signal which is proportional to velocity or rate of change of displacement of the armature shaft 20 from its desired position. The velocity signal is applied to one input (−) of an operational amplifier 136 whose output comprises one input to a summing circuit 138 which includes a resistive summing network 137 and an operational amplifier 139. The other input to the summing circuit 138 is the position signal from the comparator circuit 126a. The gain in the one or position channel determines the stiffness of the bearing while the gain in the other or velocity channel determines the dampening of the bearing. The gains in the respective position and velocity channels are determined by the component values associated with the various operational amplifiers and thus the output of operational amplifier 139 comprises a composite control signal which provides a suitable signal for properly energizing a pair of coils $32_1$ and $36_1$.

Ideally, the forces acting on the armature shaft 20 are in phase with the output of the summing aplifier 139; however, two factors cause deviation from the ideal. First, eddy currents in the armature shaft 20 and in the core material of the pole pieces $22_1$ and $26_1$ associated with the windings $32_1$ and $36_1$ cause a phase shift between the current energizing the respective windings of the magnetic flux produced thereby. A phase corrector circuit 140 including a parallel resistive capacitive network 142 and two operational amplifiers 144 and 146 are therefore included in the circuitry shown in Figure 9 to partially correct this deviation. The second phase shift is caused by the inductance of the coils $32_1$ and $36_1$ which causes the current flowing therein to lag the voltage applied across them during excitation. This second deviation is overcome by a current feedback signal developed across a series resistor 148 coupled to like ends of the coil windings $32_1$ and $36_1$. This signal is fed back to one input (−) of a driver amplifier circuit 150 including an operational amplifier 152 whose other input (+) is connected to the output of operational amplifier 146. The driver amplifier 150 also includes a voltage feedback provided by a resistor 154 coupled between the output and the negative (−) input of the operational amplifier 152 to limit the voltage gain of the driver amplifier circuit 150 in order to insure stability of the current feedback.

The output of the operational amplifier 152 comprises a signal current which is channeled to the pair of Y axis electromagnet coils $32_1$ and $36_1$ by the diodes 156 and 158 which are oppositely poled with respect to one another so that the positive output from the driver amplifier circuit 150 causes coil $32_1$ to be energized thereby attracting the shaft 20 upwardly along the Y axis while a negative output therefrom energizes the coil $36_1$ which causes a downward attraction of the shaft 20 on the Y axis. Thus, depending upon any deviation from its aligned position along the Y axis, the electromagnets $10_1$ and $14_1$ will be properly energized to drive the shaft 20 in the proper direction until a zero error signal is produced at the output of the comparator circuit 126a.

**Claims**

1. An active magnetic bearing assembly comprising
— an elongate housing (18),
— a shaft (20) within the housing (18) with a major linear axis and comprised at least partially of magnetic material,
— electromagnetic means ($10_1$—$16_1$; $10_2$—$16_2$) comprising a set of equidistantly spaced electromagnets arranged in a plane which is perpendicular to the major axis of the shaft (20) and selectively energisable for controlling the radial position of the shaft (20),
— means (106) for controlling the axial position of the shaft (20),
— sensor means ($48_1$—$50_2$) for detecting the position of the shaft (20), and

— circuit means (126, 132, 138, 140, 150) connected to the sensor means ($48_1$—$50_2$) and to the electromagnetic means ($10_1$—$16_2$) for controlling the radial position of the shaft (20),
characterized in that the means (106) for controlling the axial position of the shaft (20) comprises an axially magnetized bumper assembly (106; 108, 110, 112, 114) comprising a pair of stationary magnets (112, 114) spaced apart and held in place in a housing (116) and a magnet (108) attached to the shaft (20, 110) for substantial axial movement between the pair of magnets (112, 114),
and in that the shaft (20) comprises defined regions wherein the volume of magnetic material per unit length of the shaft (20) is greater than in the rest of the shaft, the regions being of such a length that they remain within the influence of the electromagnetic means over said substantial axial movement of the shaft (20).

2. The active magnetic bearing assembly according to claim 1, characterized in that a coil (118) is provided around the housing (116) and connected to a power source for controlling the axial movement of the shaft (20).

3. The active magnetic bearing assembly according to claim 1 or 2, characterized in that the polarity of the stationary magnets (112, 114) is opposite to the polarity of the magnet (108) attached to the shaft (20, 110).

4. The active magnetic bearing assembly according to any of claims 1 to 3, characterized in that the shaft (20) is formed as a unitary member having a small diameter axial bore (85) and enlarged diameter end bore portions (87, 89) provided in the region of the sensor means ($48_1$—$50_2$).

5. The active magnetic bearing assembly according to any of claims 1 to 4, characterized in that the diameter of the shaft (20) is reduced in an intermediate region (91) between regions in which the volume of magnetic material per unit length of the shaft (20) is greater than in the rest of the shaft.

6. The active magnetic bearing assembly according to any of claims 1 to 5, characterized in that the shaft (20') comprises an axial bore (85) and a pair of magnetic sleeve members (98, 100) fitted on the outer surface of the shaft (20') in the region of the electromagnetic means ($10_1$—$16_2$).

7. The active magnetic bearing assembly according to any of claims 1 to 5, characterized in that the hollow shaft (20'') is of magnetic material within which a pair of internal magnetic sleeve members (102, 104) is placed in the region of the electromagnetic means ($10_1$—$16_2$).

8. The active magnetic bearing assembly according to any of claims 1 to 7, characterized in that the housing (18) is provided with outwardly extending shield plates (72, 74) shielding the sensor means ($48_1$—$50_2$) from the electromagnetic means ($10_1$—$16_2$).

## Patentansprüche

1. Aktive Magnetlageranordnung, umfassend
   — ein längliches Gehäuse (18),
   — eine Welle (20), die innerhalb des Gehäuses (18) mit einer linearen Hauptachse angeordnet ist und zumindest teilweise aus magnetischem Material besteht,
   — eine elektromagnetische Einrichtung $(10_1—16_1; 10_2—16_2)$, die einen Satz von äquidistant beabstandeten Elektromagneten aufweist, die in einer Ebene senkrecht zur Hauptachse der Welle (20) angeordnet und selektiv erregbar sind, um die radiale Position der Welle (20) zu steuern,
   — eine Einrichtung (106) zur Steuerung der axialen Position der Welle (20),
   — eine Sensoreinrichtung $(48_1—50_2)$ zur Abtastung der Position der Welle (20), und
   — eine Schaltungsanordnung (126, 132, 138, 140, 150), die an die Sensoreinrichtung $(48_1—50_2)$ und an die elektromagnetische Einrichtung $(10_1—16_2)$ angeschlossen ist, um die radiale Position der Welle (20) zu steuern,
   dadurch gekennzeichnet, daß die Einrichtung (106) zur Steuerung der axialen Position der Welle (20) eine axial magnetisierte Pufferanordnung (106; 108, 110, 112, 114), die ein Paar von stationären Magneten (112, 114) umfaßt, die in Abstand voneinander angeordnet und in ihrer Position in einem Gehäuse (116) erhalten sind, sowie einen Magneten (108) aufweist, der an der Welle (20, 110) angebracht und für eine wesentliche axiale Bewegung zwischen dem Paar von Magneten (112, 114) ausgelegt ist,
   und daß die Welle (20) definierte Bereiche aufweist, in denen das Volumen an magnetischem Material pro Längeneinheit der Welle (20) größer ist als in dem Rest der Welle, wobei die Bereiche von solcher Länge sind, daß sie über die wesentliche axiale Bewegung der Welle (20) im Einflußbereich der elektromagnetischen Einrichtung bleiben.

2. Aktive Magnetlageranordnung nach Anspruch 1, dadurch gekennzeichnet, daß eine Spule (118) um das Gehäuse (116) angeordnet und an eine Stromversorgung zur Steuerung der axialen Bewegung der Welle (20) angeschlossen ist.

3. Aktive Magnetlageranordnung nach Anspruch 1 oder 2, dadurch gekennzeichnet, daß die Polarität der stationären Magneten (112, 114) entgegengesetzt zur Polarität des Magneten (108) ist, der an der Welle (20, 110) angebracht ist.

4. Aktive Magnetlageranordnung nach einem der Ansprüche 1 bis 3, dadurch gekennzeichnet, daß die Welle (20) als einstückiges Teil ausgebildet ist, das eine axiale Bohrung (85) mit kleinem Durchmesser sowie Endbohrungsbereiche (87, 89) mit großen Durchmesser aufweist, die im Bereich der Sensoreinrichtung $(48_1—50_2)$ angeordnet sind.

5. Aktive Magnetlageranordnung nach einem der Ansprüche 1 bis 4, dadurch gekennzeichnet, daß der Durchmesser der Welle (20) in einem mittleren Bereich (91) zwischen Bereichen reduziert ist, in denen das Volumen an magnetischem Material pro Längeneinheit der Welle (20) größer ist als in dem Rest der Welle.

6. Aktive Magnetlageranordnung nach einem der Ansprüche 1 bis 5, dadurch gekennzeichnet, daß die Welle (20') eine axiale Bohrung (85) und ein Paar von magnetischen Buchsenteilen (98, 100) aufweist, die auf der Außenoberfläche der Welle (20') in dem Bereich der elektromagnetischen Einrichtung $(10_1—16_2)$ angebracht sind.

7. Aktive Magnetlageranordnung nach einem der Ansprüche 1 bis 5, dadurch gekennzeichnet, daß die hohle Welle (20'') aus magnetischem Material besteht, in welchem ein Paar von inneren magnetischen Buchsenteilen (102, 104) in dem Bereich der elektromagnetischen Einrichtung $(10_1—16_2)$ angeordnet sind.

8. Aktive Magnetlageranordnung nach einem der Ansprüche 1 bis 7, dadurch gekennzeichnet, daß das Gehäuse (18) mit sich nach außen erstreckenden Abschirmungsplatten (72, 74) versehen ist, welche die Sensoreinrichtung $(48_1—50_2)$ gegenüber der elektromagnetischen Einrichtung $(10_1—16_2)$ abschirmen.

## Revendications

1. Palier magnétique actif comportant
   — un carter allongé (18),
   — un arbre (20) placé à l'intérieur du carter (18) ayant un axe linéaire principal et fait au moins en partie d'un matériau magnétique,
   — des moyens électromagnétiques $(10_1—16_1; 10_2—16_2)$ comprenant un jeu d'électro-aimants équidistants disposés dans un plan perpendiculaire à l'axe principal de l'arbre (20) et excitables sélectivement pour commander la position radiale de l'arbre (20),
   — des moyens (106) pour commander la position axiale de l'arbre (20),
   — des moyens de captage $(48_1—50_2)$ pour détecter la position de l'arbre (20), et
   — un circuit (126, 132, 138, 140, 150) connecté aux moyens de captage $(48_1—50_2)$ et aux moyens électromagnétiques $(10_1—16_2)$ pour commander la position radiale de l'arbre (20),
   caractérisé en ce que les moyens (106) pour commander la position axiale de l'arbre (20) comportent un butoir (106, 108, 110, 112, 114) aimanté axialement comprenant deux aimants stationnaires (112, 114) écartés l'un de l'autre et maintenus en place dans un carter (116) et un aimant (108) assujetti à l'arbre (20, 110) pour un mouvement axial important entre les deux aimants (112, 114),
   et en ce que l'arbre (20) comporte des régions déterminées où le volume du matériau magnétique par unité de longueur d'arbre (20) est plus grand que dans le reste de l'arbre, lesdites régions étant d'une longueur telle qu'elles restent sous l'influence des moyens électromagnétiques pendant ledit mouvement axial important de l'arbre (20).

2. Palier magnétique actif selon la revendication 1, caractérisé en ce qu'un enroulement (118) est disposé autour du carter (116) et est connecté à une source de courant pour commander le mouvement axial de l'arbre (20).

3. Palier magnétique actif selon la revendication 1 ou 2, caractérisé en ce que la polarité des aimants stationnaires (112, 114) est opposée à la polarité de l'aimant (108) assujetti à l'arbre (20, 110).

4. Palier magnétique actif selon une des revendications 1 à 3, caractérisé en ce que l'arbre (20) forme un ensemble ayant un alésage axial (85) de faible diamètre et des parties d'alésage d'extrémité (87, 89) de diamètre plus important dans la région des moyens de captage (48₁—50₂).

5. Palier magnétique actif selon une des revendications 1 à 4, caractérisé en ce que le diamètre de l'arbre (20) est réduit dans une région intermédiaire (91) située entre les régions dans lesquelles le volume du matériau magnétique par unité de longueur d'arbre (20) est plus grand que dans le reste de l'arbre.

6. Palier magnétique actif selon une des revendications 1 à 5, caractérisé en ce que l'arbre (20') comporte un alésage axial (85) et deux manchons magnétiques (98, 100) fixés sur la surface extérieure de l'arbre (20') dans la région des moyens électromagnétiques (10₁—16₂).

7. Palier magnétique actif selon une des revendications 1 à 5, caractérisé en ce que l'arbre (20') creux est fait d'un matériau magnétique à l'intérieur duquel sont placés deux manchons magnétiques internes (102, 104) dans la région des moyens électromagnétiques (10₁—16₂).

8. Palier magnétique actif selon une des revendications 1 à 7, caractérisé en ce que le carter (18) est muni de plaques de blindage (72, 74) s'étendant extérieurement, lesquelles assurent le blindage des moyens de captage (48₁—50₂) par rapport aux moyens électromagnétiques (10₁—16₂).

**FIG.1**

0 054 617

FIG.2

FIG.3

FIG.4

FIG.6

FIG.5

**FIG.9**

**FIG.7**

**FIG.8**